# EUROPEAN PATENT APPLICATION

(11) **EP 1 514 673 A2**
(43) Date of publication of application: **16.03.2005**
(21) Application number: 04021570.9
(22) Date of filing: 10.09.2004
(51) Int. Cl.: B29D 17/00, B29C 65/00, B29C 35/00

(54) **Disc-shaped recording medium manufacturing method and stamper member usable for disc-shaped recording medium manufacturing method**

(30) Priority: 10.09.2003 JP 2003318118
(71) Applicant: TDK Corporation, Tokyo 103-8272 (JP)
(72) Inventor: Komaki, Tsuyoshi, c/o TDK Corporation, Tokyo 103-8272 (JP)
(74) Representative: HOFFMANN - EITLE

(57) **Abstract**

Disclosed are a disc-shaped recording medium manufacturing method capable of restraining a manufacturing cost for manufacturing a disc-shaped recording medium by use of a stamper member made of a high-cost resin material and a stamper member usable for this manufacturing method. This disc-shaped recording medium manufacturing method involves applying an energy beam curing resin to an inner peripheral portion of a first recording layer formed on a disc-shaped substrate, thereafter disposing a stamper member so that a first transfer face thereof faces the disc-shaped substrate, rotating the disc-shaped substrate in order to spin-coat the energy beam curing resin between the disc-shaped substrate and the stamper member, irradiating the energy beam curing resin with an energy beam while rotating the disc-shaped substrate, exfoliating the stamper member in a way that leaves, on the disc-shaped substrate, a first spacer layer made of the energy beam curing resin with the irradiation of the energy beam, forming a second recording layer on the surface of the first spacer layer transferred from the first transfer face, applying the energy beam curing resin to an inner peripheral portion of the second recording layer, disposing the already-exfoliated stamper member so that its second transfer face 16 opposite to the first transfer face thereof faces the disc-shaped substrate, similarly forming a second spacer layer on the second recording layer and forming a third recording layer on the surface of the second spacer layer transferred from the second transfer face.

## Description

### BACKGROUND OF THE INVENTION

### Field of the Invention

The present invention relates to a disc-shaped recording medium manufacturing method involving the use of a stamper member and to a stamper member usable for the disc-shaped recording medium manufacturing method.

### Description of the Prior Art

As Japanese Patent Application Laid-Open Publication No.2003-67990 discloses, a multi-layered optical disc has hitherto been developed for gaining a large storage capacity. When manufacturing, for example, a single-sided 2-layered type of Blu-ray Disc, a spacer layer is formed between a disc-shaped substrate and a stamper member, and a hyperfine rugged groove on the stamper member is transferred onto the surface of the spacer layer by exfoliating the stamper member. In this case, the stamper member is made of an olefin resin exhibiting an easy-to-exfoliate property with respect to a resin material forming the spacer layer.

The stamper member comes to, however, after the groove has been transferred onto the surface of the spacer layer and the stamper has been exfoliated from the spacer layer, have no more use and is disposed of. A unit price of the olefin resin forming the stamper member is, however, high, resulting in a rise in manufacturing cost thereof.

### SUMMARY OF THE INVENTION

It is a primary object of the present invention to provide a disc-shaped recording medium manufacturing method capable of restraining a manufacturing cost for manufacturing a disc-shaped recording medium by use of a stamper member made of a high-cost resin material and a stamper member usable for this manufacturing method.

A method of manufacturing a disc-shaped recording medium according to the present embodiment includes a first step of applying an energy beam curing resin to an inner peripheral portion of a first recording layer formed on a disc-shaped substrate, and thereafter disposing a stamper member so that a first transfer face thereof faces the disc-shaped substrate, a second step of rotating the disc-shaped substrate in order to spread the energy beam curing resin between the disc-shaped substrate and the stamper member, a third step of irradiating the energy beam curing resin with an energy beam while rotating the disc-shaped substrate, a fourth step of exfoliating the stamper member in a way that leaves, on the disc-shaped substrate, a first spacer layer made of the energy beam curing resin with the irradiation of the energy beam, a fifth step of forming a second recording layer on the surface of the first spacer layer transferred from the first transfer face, a sixth step of applying the energy beam curing resin to an inner peripheral portion of the second recording layer, and disposing the already-exfoliated stamper member so that its second transfer face opposite to the first transfer face thereof faces the disc-shaped substrate, and a seventh step of forming a second spacer layer on the second recording layer and forming a third recording layer on the surface of the second spacer layer transferred from the second transfer face by executing the second through fifth steps.

According to the disc-shaped recording medium manufacturing method, there are executed the transfer onto the surface of the first spacer layer from the first transfer face of one single stamper member and further the transfer onto the surface of the second spacer layer from the second transfer face opposite to the first transfer face. This contrivance enables the disc-shaped recording medium to be manufactured by making the use of both surfaces of the single stamper member. It is therefore possible to efficiently use the stamper member and to restrain a manufacturing cost even when the stamper member is made of a high-cost resin material.

The method of manufacturing the disc-shaped recording medium further includes of a step of forming a light transmissive layer on a third recording layer of the second spacer layer.

A stamper member according to the present embodiment includes transfer faces each having a rugged hyperfine pattern to be transferred onto the surface of a spacer layer or the like of a disc-shaped recording medium, and provided on both surfaces of the stamper member.

According to the stamper member, there can be executed the transfer onto the surface of the spacer layer from one transfer face of the stamper member and further the transfer onto the surface of another spacer layer from the transfer face opposite to one transfer face thereof. This contrivance enables the disc-shaped recording medium to be manufactured by making the use of both surfaces of the single stamper member. It is therefore possible to efficiently use the stamper member and to restrain the manufacturing cost even when the stamper member is made of the high-cost resin material.

In the stamper member described above, the stamper member is made of a resin material containing an olefin resin, whereby easy exfoliation from the resin forming the spacer layer can be attained.

A plurality of spacer layers can be formed by applying the stamper member according to the present embodiment to the aforementioned method of manufacturing the disc-shaped recording medium, however, the application is not limited to this scheme. For example, one transfer face is employed for forming a single-tiered spacer layer, and the other transfer face provided on the opposite surface can be used for forming the spacer layer of the different disc-shaped recording medium, wherein the usage of the stamper member can become efficient enough to restrain the manufacturing cost in the whole manufacture of the disc-shaped recording medium.

According to the method of manufacturing the disc-shaped recording medium and to the stamper member usable for this manufacturing method in the present embodiment, the cost for manufacturing the disc-shaped recording medium can be restrained even when the stamper member is made of the expensive resin material.

### BRIEF DESCRIPTION OF THE DRAWINGS

FIGS. 1A to 1C are side sectional views each showing a process of manufacturing a 2-layered optical disc in the present embodiment;
FIGS. 2A to 2C are side sectional views showing processes of manufacturing the 2-layered optical disc, which are executed subsequently to the process in FIG. 1C; and
FIGS. 3A to 3D are side sectional views showing processes of manufacturing the 2-layered optical disc, which are executed subsequently to the process in FIG.
2C.

### DETAILED DESCRIPTION OF THE PREFERRED EMBODIMENTS

A best mode for carrying out the present invention will hereinafter be described with reference to the drawings.

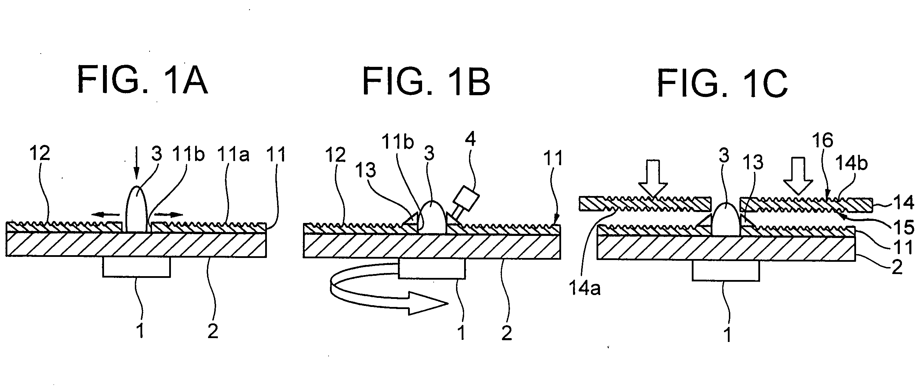

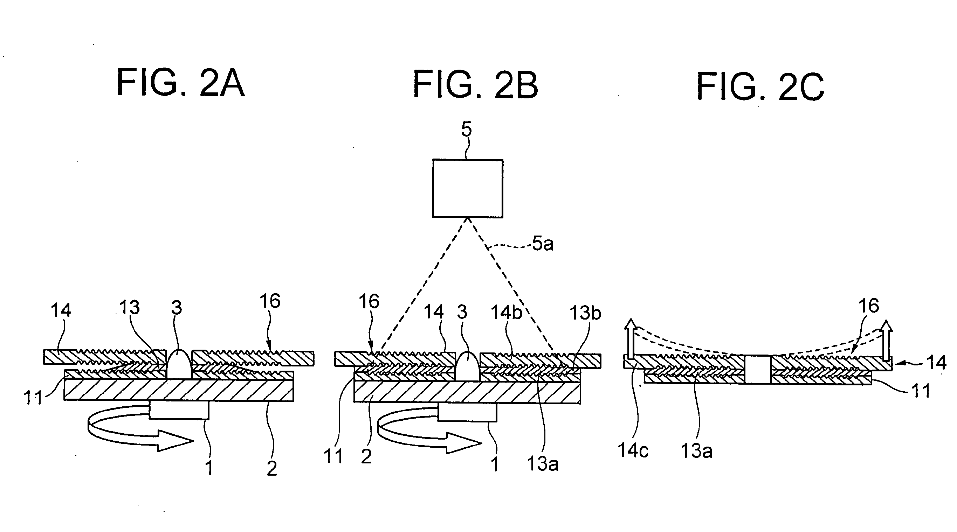

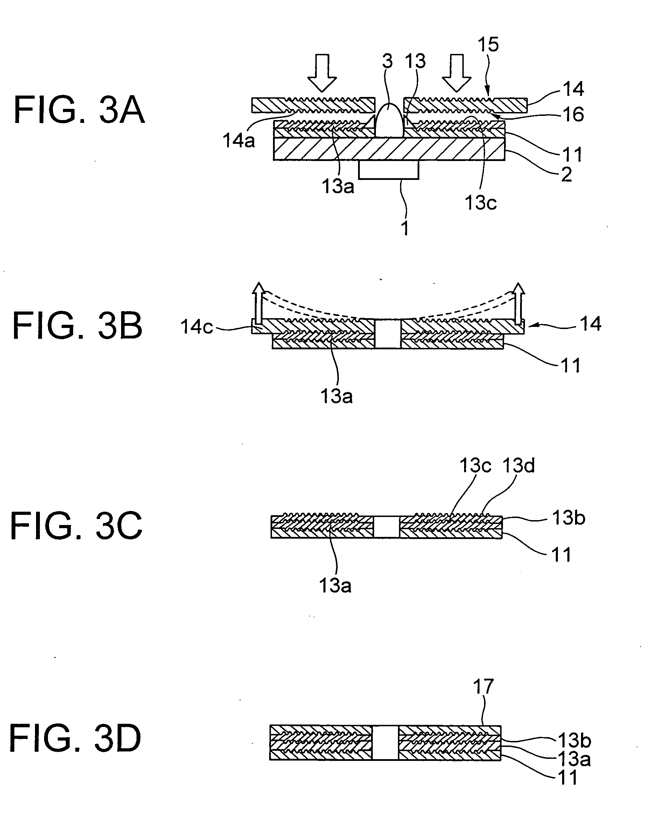

FIGS. 1A to 1C are side sectional views each showing a process of manufacturing a 2-layered optical disc in the present embodiment. FIGS. 2A to 2C are side sectional views showing processes of manufacturing the 2-layered optical disc, which are executed subsequently to the process in FIG. 1C. FIGS. 3A to 3D are side sectional views showing processes of manufacturing the 2-layered optical disc, which are executed subsequently to the process in FIG. 2C.

The present embodiment exemplifies a method of manufacturing a single-sided 3-layered type optical disc by forming two spacer layers. To be specific, as shown in FIG. 1A, a stage 2 for spin coating is so constructed as to be rotated by a motor (unillustrated) through a rotary shaft 1. An elastic deformation retaining member 3 made of an elastically deformable material for holding a disc-shaped substrate 11, is fixed to a central portion of a top surface of the stage 2. Further, the disc-shaped substrate 11 includes a recording layer formed over a recording face 12 provided with a recording/reproducing hyperfine rugged portion 11a, and has a central hole 11b. The recording layer consists of a reflection layer, a dielectric layer, an alloy layer, etc..

As shown in FIG. 1A, the elastic deformation retaining member 3 tapered off with its elastic deformation receives insertion of the disc-shaped substrate 11 via the central hole 11b. Thereafter, the elastic deformation retaining member 3 is elastically restored in directions of arrowheads in FIG. 1A, whereby the disc-shaped substrate 11 is tightly secured to and retained by the elastic deformation retaining member 3 at the central hole 11b and is thus fixed to the stage 2.

Next, as shown in FIG. 1B, an ultraviolet curing resin is discharged over the vicinity of a boundary between the central hole 11b of the disc-shaped substrate 11 and the elastic deformation retaining member 3 from a nozzle 4 in a way that rotates the stage 2 by the motor (unillustrated) through the rotary shaft 1, thus coating the ultraviolet curing resin 13 over the vicinity of an inner periphery of the disc-shaped substrate 11.

Subsequently, as shown in FIG. 1c, a translucent stamper member 14 including a first transfer face 15 formed with a recording/reproducing hyperfine rugged portion 14a is aligned with the central hole 11b of the disc-shaped substrate 11 and is thus superimposed on the disc-shaped substrate 11 so as to receive insertion of the elastic deformation retaining member 3. The stamper member 14 further includes a second transfer face 16 on the surface opposite to the first transfer face 15. The second transfer face 16 is formed with a recording/reproducing hyperfine rugged portion 14b. This stamper member 14 is can be formed by injection molding within a die assembly, wherein the stamper member is made of an olefin resin, etc. that exhibits transmissivity of ultraviolet-rays and has an easy-to-exfoliate property with respect to the ultraviolet curing resin material.

An outside diameter of the stamper member 14 is slightly larger than the disc-shaped substrate 11, wherein an outer peripheral edge 14c thereof protrudes therefrom. The stamper member 14 is disposed so that the first transfer face 15 thereof faces the recording face 12 of the disc-shaped substrate 11. The stamper member 14 may have the same diameter as the disc-shaped substrate 11 has, however, its diameter is preferably larger than the disc-shaped substrate 11 in order to ensure a gripping area in consideration of the easy-to-exfoliate property.

Next, the stage 2 is rotated at a high speed together with the rotary shaft 1, thereby rotating the disc-shaped substrate 11 and the stamper member 14 at the high speed as shown in FIG. 2A. Then, the ultraviolet curing resin 13 is forced to be directed to the outer periphery side with a centrifugal force and is thereby rotated off the outer peripheral edge between the recording face 12 and the first transfer face 15, thus effecting the spin coating till a desired layer thickness is obtained.

Next, as shown in FIG. 2B, a top face of the stamper member 14 is irradiated with ultraviolet-rays 5a (indicated by broken lines in FIG. 2B) emitted from an ultraviolet light source 5 for a predetermined period of time in a way that rotates the disc-shaped substrate 11 on the stage 2. The irradiation of the ultraviolet rays cures the ultraviolet curing resin 13 interposed between the recording face 12 of the disc-shaped substrate 11 and the first transfer face 15 of the stamper member 14, thereby forming a first spacer layer 13a.

Subsequently, as shown in FIG. 2C, the stamper member 14 is raised upward in FIG. 2C at the vicinity of the outer peripheral edge 14c thereof and is thus exfoliated, while the first spacer layer 13a is left on the side of the disc-shaped substrate 11. This exfoliation can be easily executed because of the stamper member 14 being easy to exfoliate from the ultraviolet curing resin.

With the exfoliation of the stamper member 14, the recording face 13c (FIG. 3A) having a groove formed by transferring the rugged portion 14a of the transfer face 15 of the stamper member 14 onto this recording face 13c, gets exposed on the surface of the first spacer layer 13a, however, a second recording layer is formed further on this recording face 13c. The recording layer consists of a dielectric layer an alloy layer, a Si layer and so on.

Next, as shown in FIG. 3A, the stamper member 14 is so disposed as to be inverted in its up-and-down direction as compared with the position in FIG. 1C so that the second transfer face 16 of the stamper member 14 faces the recording face 13c of the first spacer layer 13a formed with the recording layer. Then, the stamper member 14 is aligned with the central hole 11b of the disc-shaped substrate 11 and is thus superimposed on the disc-shaped substrate 11 so as to receive insertion of the elastic deformation retaining member 3 on the stage 2. The ultraviolet curing resin 13 is coated over the vicinity of the inner periphery of the first spacer layer 13a as in the case of FIG. 1B before the inverted disposition of the stamper member 14.

Next, in the same way as in FIG. 2A, the disc-shaped substrate 11 and the stamper member 14 are rotated at the high speed, thereby spin-coating the ultraviolet curing resin 13 between the recording face 13c of the first spacer layer 13a and the second transfer face 16 till a desired layer thickness is acquired. Next, in the same manner as in FIG. 2B, the top face of the stamper member 14 is irradiated with the ultraviolet rays 5a emitted from the ultraviolet light source 5 for a predetermined period of time, thereby curing the ultraviolet curing resin 13 interposed between the recording face 13c and the second transfer face 16. The second spacer layer 13b (FIG. 3B) is thus formed.

Subsequently, as shown in FIG. 3B, the stamper member 14 is raised upward in FIG. 3b at the vicinity of the outer peripheral edge 14c thereof and is thus exfoliated, while the respective spacer layers 13a and 13b are left on the side of the disc-shaped substrate 11.

With the exfoliation of the stamper member 14, as shown in FIG. 3C, the recording face 13d having a groove formed by transferring the rugged portion 14b of the second transfer face 16 of the stamper member 14 onto this recording face 13d, gets exposed on the surface of the second spacer layer 13b, however, a third recording layer is formed further on this recording face 13d. Thereafter, in the case of FIGS. 1A to 1C and FIGS. 2A to 2C, the resin material is discharged as droplets over the vicinity of the inner periphery of the second spacer layer 13b, and the disc-shaped substrate 11 is rotated at the high speed, thereby forming, as shown in FIG. 3D, a light transmissive layer 17 up to a predetermined thickness on the second spacer layer 13b by the spin coat method. The recording layer consists of a dielectric layer an alloy layer, a Si layer and so on.

In the way given above, as shown in FIG. 3D, the two spacer layers 13a and 13b are formed between the disc-shaped substrate 11 and the light transmissive layer 17, the recording face 12 is formed on the disc-shaped substrate 11, the recording face 13c is formed on the first spacer layer 13a, and further the recording face 13d is formed on the second spacer layer 13b, whereby the single-sided 3-layered type optical disc including the two spacer layers 13a and 13b can be manufactured.

As described above, the hyperfine rugged pattern is transferred onto the surface of the first spacer layer 13a from the first transfer face 15 of the single stamper member 14, and subsequently the hyperfine rugged pattern is transferred onto the surface of the second spacer layer 13b from the second transfer face 16 opposite to the first transfer face 15. Thus, the disc-shaped recording medium having the two spacer layers can he manufactured by use of the double faces of the single stamper member 14. Therefore, the stamper member can be utilized at high efficiency, and, even when the stamper member is made of the high-cost olefin resin, etc., a manufacturing cost can be restrained. Further, the resin material forming the stamper member is efficiently used, and this contributes to save resources.

### <Examples>

Next, the method of manufacturing the single-sided 3-layered type optical disc in the present embodiment, which has been explained with reference to FIGS. 1A through 3D, will be described more specifically by way of examples.

To start with, the recording layer is formed on the disc-shaped substrate as below. The disc-shaped substrate is made of polycarbonate and formed with the central hole whose diameter is 15 mm, and is 120 mm in diameter and 1.2 mm in thickness. A hyperfine rugged groove based on a groove recording system is formed in this disc-shaped substrate. A groove width thereof is on the order of 160 nm (a track pitch is 0.32µm), and its depth is set to 20 nm.

Then, the reflection layer made of Al₉₈Pd₁Cu₁ (atomic ratio) is formed up to a layer thickness of 100 nm on the groove surface of the disc-shaped substrate by a sputtering method. Next, a second dielectric layer made of ZnS-SiO₂ (80:20) is formed up to a layer thickness of 40 nm by the sputtering method. Subsequently, an alloy layer made of CuAlAu (64:23:13) is formed up to a layer thickness of 5 nm on the surface of the second dielectric layer by the sputtering method. Next, a Si layer is formed up to a layer thickness of 5 nm by the sputtering method, whereby the recording layer structured of these respective layers is acquired. Subsequently, a first dielectric layer made of ZnS-SiO₂ (80:20) is formed up to a layer thickness of 20 nm on the surface of the recording layer by the sputtering method.

Next, the disc-shaped substrate formed with the recording layer is fixed via its central hole to the stage, and thereafter a resin mixture containing the ultraviolet curing resin (which will hereinafter be abbreviated to a [2P resin] as the case may be) is spin-coated up to a layer thickness of 15/µm over the first dielectric layer. This 2P resin involves using the following mixture.
· Kayaradd R-167 (made by Nippon Kayaku Co., Ltd.): 60 mass part (ECH modification 1, 6-hexanedioldiacrylate)
· Aronix M-309 (made by Toagosei Co., Ltd.): 30 mass part (trimethylolpropaneacrylate)
· THF-A (Kyoueisha Chemical Co., Ltd.): 10 mass part (tetrahydrofurfurylacrylate)
· Irugacure184(Chiba Special Chemicals Co., Ltd.): 3 mass part (1-hydroxycichlohexylphenylketone)

The aforementioned 2P resin having a viscosity that is on the order of 700 Pa·s, was spin-coated under the condition of 4000 rpm X 10 sec.

Next, there is formed a transparent resin stamper (made by Zeon Corporation, Zeonex resin) having a diameter of 130 mm and a thickness of 1. 2 mm and including double-sided hyperfine rugged grooves that are each 0.16µm in width (a track pitch is 0.32µm) and 20 nm in depth. This transparent resin stamper is superimposed on the disc-shaped substrate so as not to contain any air bubbles. Thereafter, the transparent resin stamper is irradiated with the ultraviolet rays with intensity on the order of 1000 mJ/cm², thereby curing the 2P resin. An UV lamp used as an ultraviolet light source for curing the 2P resin is BHG-750 made by Mejiro Precision Corp..

Next, after the disc-shaped substrate having the aforementioned 2P spacer layer has been dried at 60°C for 4 hours to 24 hours, a second dielectric layer made of ZnS-SiO₂ (80:20) is formed up to a layer thickness of 25 nm on the groove surface of the 2P spacer layer by the sputtering method. Subsequently, an alloy layer made of CuAlAu (64:23:13) is formed up to a layer thickness of 5 nm on the surface of the second dielectric layer by the sputtering method. Next, a Si layer is formed up to a layer thickness of 5 nm by the sputtering method, whereby the recording layer structured of these respective layers is acquired. Subsequently, a first dielectric layer made of TiO₂ is formed up to a layer thickness of 30 nm on the surface of the recording layer by the sputtering method.

Next, the disc-shaped substrate formed with the recording layer on the 2P spacer layer is fixed via the central hole to the stage, and thereafter another 2P resin made of the same material as above, which contains the ultraviolet curing resin, is spin-coated up to a layer thickness of 15µm on the first dielectric layer.

Subsequently, the transparent resin stamper, after being inverted in its up-and-down direction, is superimposed on the disc-shaped substrate so as not to contain the air bubbles, and the irradiation of the ultraviolet rays with intensity of 1000 mJ/cm² is effected through the transparent resin stamper, thereby by curing another 2P. Another 2P spacer layer is thus formed.

Next, after the disc-shaped substrate having another 2P spacer layer described above has been dried at 60°C for 4 hours to 24 hours, a second dielectric layer made of ZnS-SiO₂ (80:20) is formed up to a layer thickness of 25 nm on the groove surface of the 2P spacer layer by the sputtering method. Subsequently, an alloy layer made of CuAlAu (64:23:13) is formed up to a layer thickness of 5 nm on the surface of the second dielectric layer by the sputtering method. Next, a Si layer is formed up to a layer thickness of 5 nm by the sputtering method, whereby the recording layer structured of these respective layers is acquired. Subsequently, a first dielectric layer made of TiO₂ is formed up to a layer thickness of 30 nm on the surface of the recording layer by the sputtering method.

Next, the ultraviolet curing resin (SSP50U10, having a viscosity of 1,900 cP at 25°C, made by Shouwa High Polymer Co., Ltd.) is coated up to approximately 70µm by the spin coat method. Then, the ultraviolet curing resin is irradiated with the ultraviolet rays with intensity of 2000 mJ/cm² and is thereby cured, and a light transmissive layer is formed. Thus, the single-sided 3-layered optical disc including the two spacer layers is manufactured by making the use of the double faces of the single transparent resin stamper.

The best mode for carrying out the present invention and the examples thereof have been described so far, however, the present invention is not limited to the aforementioned best mode and examples and can be modified in a variety of forms within the scope of the technical concept of the present invention. For example, the optical disc manufacturing method according to the present invention is applied to the manufacture of the single-sided 3-layered optical disc in each mode described above and may also be applied to a more multi-layered optical disc.

Furthermore, the stamper member according to the present invention can be applied to the manufacture of a single-sided 2-layered optical disc having one spacer layer. Namely, the processes in FIGS. 1A through 2C being executed, the transfer is effected onto the recording face 13c of the first spacer layer 13a from the first transfer face 15 of the stamper member 14, the stamper member 14 is exfoliated, then the recording layer is formed on the recording face 13c, and thereafter the light transmissive layer is formed as shown in FIG. 3D, thereby manufacturing the single-sided 2-layered optical disc. Next, when manufacturing the optical disc in the same processes, there is effected the transfer onto the surface of the spacer layer from the second transfer face 16 by using the same stamper member 14. Thus, one single stamper member 14 can be applied to the manufacture of the different optical discs and thus can be utilized efficiently.

Similarly, the stamper member, of which the first transfer face has been used for manufacturing a certain optical disc, can use, as a matter of course, its second transfer face when applied to the manufacture of a different optical disc. In this case, the stamper member can be applied irrespective of whether both of the optical discs are the 2-layered or multi-layered, i.e., 3- or more-layered optical discs.

Further, the present embodiment and the examples have exemplified the ultraviolet curing resin as an energy beam curing resin in the present invention. The energy beam curing resin is not, however, limited to this ultraviolet curing resin and may include an electron beam curing resin and so on. The electron beams, etc. other than the ultraviolet rays described above can be given as energy beams corresponding thereto.

## Claims

1. A method of manufacturing a disc-shaped recording medium, comprising:
a first step of applying an energy beam curing resin to an inner peripheral portion of a first recording layer formed on a disc-shaped substrate, and thereafter disposing a stamper member so that a first transfer face thereof faces said disc-shaped substrate;
a second step of rotating said disc-shaped substrate in order to spread said energy beam curing resin between said disc-shaped substrate and said stamper member;
a third step of irradiating said energy beam curing resin with an energy beam while rotating said disc-shaped substrate;
a fourth step of exfoliating said stamper member in a way that leaves, on said disc-shaped substrate, a first spacer layer made of said energy beam curing resin with the irradiation of the energy beam;
a fifth step of forming a second recording layer on the surface of said first spacer layer transferred from said first transfer face;
a sixth step of applying said energy beam curing resin to an inner peripheral portion of said second recording layer, and disposing said already-exfoliated stamper member so that its second transfer face opposite to said first transfer face thereof faces said disc-shaped substrate; and
a seventh step of forming a second spacer layer on said second recording layer and forming a third recording layer on the surface of said second spacer layer transferred from said second transfer face by executing said second through fifth steps.

2. A method of manufacturing a disc-shaped recording medium according to claim 1, wherein a light transmissive layer is formed on a third recording layer of said second spacer layer.

3. A stamper member comprising:
transfer faces each having a rugged hyperfine pattern to be transferred onto the side of a disc-shaped recording medium, and provided on both surfaces of said stamper member.

4. A stamper member according to claim 3, wherein said stamper member is made of a resin material containing an olefin resin.
